# FASCICULE DE BREVET EUROPEEN

(11) **EP 3 628 544 B1**
(45) Date de publication et mention de la délivrance du brevet: **01.09.2021**
(21) Numéro de dépôt: 19197315.5
(22) Date de dépôt: 13.09.2019
(51) Int. Cl.: B60R 19/12

(54) **VÉHICULE AUTOMOBILE À SOUBASSEMENT AVANT RENFORCE MÉCANIQUEMENT**
KRAFTFAHRZEUG MIT MECHANISCH VERSTÄRKTEM VORDEREM UNTERBAU
MOTOR VEHICLE WITH MECHANICALLY REINFORCED FRONT BODY UNDERSTRUCTURE

(30) Priorité: 28.09.2018 FR 1859017
(43) Date de publication de la demande: 01.04.2020
(73) Titulaire: RENAULT s.a.s., 92100 Boulogne-Billancourt (FR)
(72) Inventeur: DO NASCIMENTO, Silvino, 78390 BOIS D'ARCY (FR); FERIN, Julien, 78180 MONTIGNY LE BRETONNEUX (FR)

(56) Documents cités:
- JP-A- 2009 040 173
- JP-A- 2011 168 174
- US-A1- 2012 019 027
- US-A1- 2016 121 828
- US-A1- 2016 297 388

## Description

L'invention a trait à la problématique des chocs entre les piétons et le pare-chocs ou bouclier avant des véhicules automobiles.

Les véhicules automobiles doivent, de nos jours, respecter de plus en plus de normes et, en particulier, des normes relatives aux chocs pouvant survenir entre un véhicule et un piéton, couramment appelées « normes chocs piéton ».

La réglementation applicable concernant les chocs entre un véhicule et un piéton impose :
- à la partie haute du pare-chocs avant du véhicule d'être relativement souple pour endommager le moins possible le genou du piéton lors d'un choc entre la jambe du piéton et cette partie haute, et
- à la partie basse de ce pare-chocs d'être suffisamment rigide pour qu'un choc entre le tibia du piéton et le pare-chocs provoque un pivotement de la jambe du piéton vers le haut, de manière à ce que la jambe du piéton vienne s'appuyer sur la partie haute du pare-chocs et le capot du véhicule.

Le document US 2012/019027 A1 divulgue un véhicule selon le préambule de la revendication 1.

La présente invention a ainsi pour objet un véhicule automobile comprenant les caractéristiques de la revendication 1.

La rigidification de la partie avant du soubassement du véhicule permet de satisfaire aux « normes chocs piéton » en cas de choc frontal entre un piéton et la partie basse du pare-chocs. La présence d'une plaque de masquage dotée d'une face externe aérodynamique au droit de ladite au moins une zone structurée/rigidifiée de la partie avant, et du côté externe de cette zone, permet de masquer le ou les éléments de structure de la zone qui, en l'absence de plaque, dégraderaient les performances aérodynamiques du véhicule. La face externe aérodynamique de la plaque de masquage est globalement lisse, c'est-à-dire qu'elle est dépourvue de relief susceptible d'affecter les performances aérodynamiques du véhicule à l'exception notamment de trous et fixations nécessaires tels que des trous de préhension du pare-chocs assemblé pour faciliter son transport, des trous de passage pour le réglage des anti-brouillards avant...

Selon d'autres caractéristiques possibles :
- la plaque de renforcement comporte deux faces opposées dont une face externe qui est orientée vers l'extérieur du véhicule et qui offre une surface aérodynamique en dehors de ladite au moins une zone structurée dans laquelle les cavités et caissons sont disposés ;
- la plaque de masquage est fixée à la partie avant du soubassement ;
- la plaque de masquage comporte, sur une face interne orientée en regard de ladite au moins une zone structurée de la partie avant du soubassement, des organes d'accrochage qui coopèrent avec des organes d'accrochage complémentaires prévus dans la partie avant du soubassement ;
- la plaque de masquage et la partie avant du soubassement sont assemblées l'une avec l'autre de manière à présenter une continuité de surface vis-à-vis de l'extérieur du véhicule ;
- la plaque de masquage et la partie avant du soubassement assemblées l'une avec l'autre s'étendent verticalement jusqu'à une cote située en dessous de la cote de la partie basse du pare-chocs ;
- ladite au moins une zone structurée localement de la partie avant du soubassement est disposée dans l'alignement de la partie basse du pare-chocs suivant l'axe longitudinal X ;
- la partie avant du soubassement est disposée sous le compartiment moteur du véhicule ;
- la partie avant du soubassement a une forme générale semi-elliptique.

D'autres caractéristiques et avantages apparaîtront au cours de la description qui va suivre, donnée uniquement à titre d'exemple non limitatif et faite en référence aux dessins annexés, sur lesquels :
- la figure 1 est une vue schématique partielle en perspective de dessous de la partie avant d'un véhicule selon un mode de réalisation de l'invention ;
- la figure 2 est une vue schématique en plan de la face interne de la plaque de renforcement dont la face externe est illustrée sur la figure 1 ;
- la figure 3 est une vue schématique partielle de dessous de la partie avant du véhicule de la figure 1 équipée d'une plaque de masquage qui recouvre partiellement la plaque de renforcement;
- la figure 4 est une vue schématique en perspective de la face interne de la plaque de masquage dont la face externe est illustrée sur la figure 3 ;
- les figures 5a-c sont des vues schématiques partielles agrandies illustrant différents types d'organes d'accrochage utilisés pour assembler la plaque de masquage et la plaque de renforcement comme représenté sur la figure 3;
- les figures 6 à 8 illustrent les principales étapes d'assemblage de la plaque de masquage avec la plaque de renforcement ;
- la figure 9 est une vue schématique partielle en coupe arrachée montrant les plaques assemblées et fixées au pare-chocs ;
- la figure 10 est une vue schématique partielle prise sur le côté du véhicule et montrant les plaques assemblées faisant saillie en dessous du pare-chocs avant.

Dans la description qui va suivre, les directions et orientations sont indiquées en référence au repère XYZ classiquement utilisé en conception automobile, dans lequel l'axe X correspond à la direction longitudinale avant-arrière du véhicule, dirigée vers l'arrière, l'axe Y correspond à la direction transversale au véhicule, dirigée vers la droite et l'axe Z correspond à la direction verticale dirigée vers le haut. Le repère XYZ n'a pas représenté sur toutes les figures.

Les notions avant-arrière doivent être comprises par rapport au sens de marche normale du véhicule qui est dirigé vers l'avant.

Le terme « sensiblement » indique qu'un léger écart est admis par rapport à une direction, une position ou une disposition nominale déterminée, tout en restant inclus dans le cadre de l'invention. À titre d'exemple, « sensiblement horizontal » indique qu'un écart de l'ordre de 10° par rapport à une orientation strictement horizontale est admis dans le cadre du mode de réalisation de l'invention décrit.

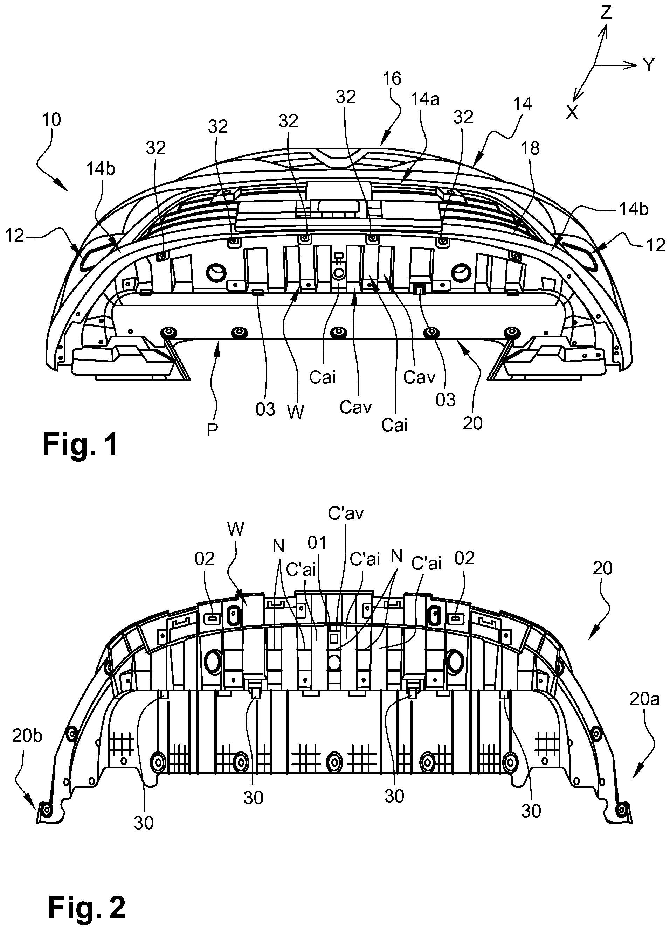

Un véhicule automobile selon un mode de réalisation de l'invention est représenté partiellement sur la figure 1. Seule la partie avant du véhicule 10 est représentée suivant une vue de dessous.

Le véhicule comporte de chaque côté, un projecteur avant 12, disposé sensiblement en dessous du capot (non représenté) du véhicule.

Le véhicule comprend plus particulièrement un pare-chocs avant ou bouclier 14 qui s'étend suivant l'axe Z sous la forme d'une partie haute 16 adjacente au capot et d'une partie basse opposée 18 qui est située en regard du sol.

Le pare-chocs avant 14 comporte, d'une part, une partie centrale 14a qui s'étend entre les projecteurs avant 12 du véhicule de manière transversale relativement à l'axe longitudinal X et, d'autre part, des parties latérales 14b qui s'étendent de manière incurvée sous les projecteurs pour revenir sur les côtés dans l'axe longitudinal du véhicule.

Le véhicule comporte également un soubassement qui forme la partie inférieure de la structure de carrosserie du véhicule et qui s'étend de l'avant à l'arrière du véhicule entre le pare-chocs avant et le pare-chocs arrière (non représenté).

Le soubassement du véhicule présente une partie avant 20, généralement disposée sous le compartiment moteur du véhicule et qui est fixée à la partie basse 18 du pare-chocs. La partie avant 20 comporte au moins une zone structurée localement W, disposée dans l'alignement de la partie basse 18 du pare-chocs suivant l'axe longitudinal X du véhicule, de manière à rigidifier ladite partie avant suivant l'axe longitudinal X. Dans le mode illustré sur la figure 1, la zone structurée localement W est située dans une portion antérieure (ou avant) de la partie avant 20 qui est adjacente à la partie basse du pare-chocs dans sa partie centrale. Ainsi, en cas de choc frontal sur la partie basse 18 du pare-chocs, la présence de la zone structurée localement W dans la partie avant 20 permet d'augmenter la raideur mécanique de ladite partie basse suivant l'axe longitudinal X du véhicule.

La partie avant 20 comporte également une portion postérieure ou arrière P qui s'étend derrière la portion antérieure W et sur les côtés, au droit des projecteurs, et qui est globalement dépourvue de creux et de saillies afin de former, du côté externe du véhicule, une surface aussi aérodynamique que possible.

Dans le mode de réalisation décrit la partie avant 20 du soubassement du véhicule est formée par une plaque de renforcement généralement en matériau plastique. La zone structurée localement W de cette plaque comprend une succession de cavités Cav et de caissons Cai disposés suivant l'axe transversal Y les uns à côté des autres. Cette succession de cavités Cav et de caissons Cai s'étend, ici, sur une longueur qui correspond sensiblement à la distance suivant l'axe Y entre les deux projecteurs avant 12, c'est-à-dire à l'extension suivant cet axe de la partie centrale 14a du pare-chocs, notamment de la partie basse dudit pare-chocs.

Les caissons et les cavités ont plus particulièrement une forme allongée suivant l'axe longitudinal X et une largeur suivant l'axe Y qui peut varier selon la position axiale des caissons et des cavités le long de l'axe Y, par exemple pour tenir compte de contraintes locales d'implantation d'équipements et/ou de fixations. La profondeur des caissons et des cavités, tout comme leur longueur et leur largeur, sont dimensionnées de manière adaptée afin de procurer la rigidité suffisante à la partie basse du pare-chocs pour être en conformité avec la réglementation en vigueur en cas de choc avec un piéton.

Comme représenté sur la figure 1, la face externe de la plaque de renforcement 20 est globalement aérodynamique (notamment dans sa portion postérieure P) à l'exception de la zone structurée W dans laquelle les cavités et les caissons sont formés. Les cavités Cav sont disposées en retrait suivant l'axe Z par rapport à la surface globalement lisse du reste de la plaque de renforcement.

Sur la figure 2 la face interne de la plaque de renforcement montre l'alternance de caissons et de cavités entre les caissons. Une cavité Cav sur la face externe de la figure 1 forme un caisson C'ai sur la face interne de la figure 2 et inversement pour un caisson Cai sur la face externe de la figure 1 et une cavité C'av sur la face interne de la figure 2.

Comme représenté sur la figure 2, des nervures de rigidification N sont aménagées dans les cavités C'av, entre deux caissons successifs C'ai, sur la face interne de la figure 2 afin d'augmenter la raideur de la plaque suivant l'axe longitudinal Y (transversal). La plaque de renforcement étant généralement fabriquée par moulage par injection, cette disposition permet de renforcer/rigidifier la structure de la plaque suivant son axe de démoulage.

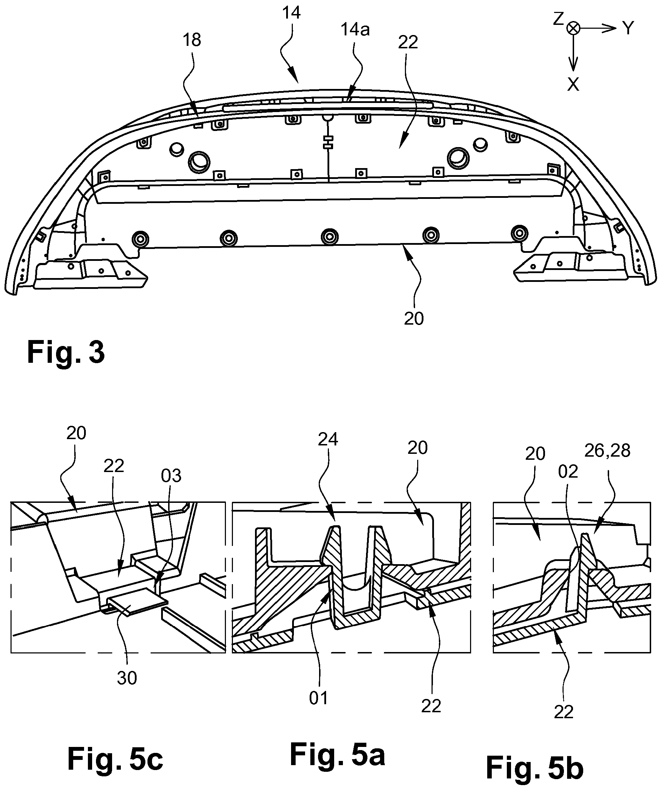

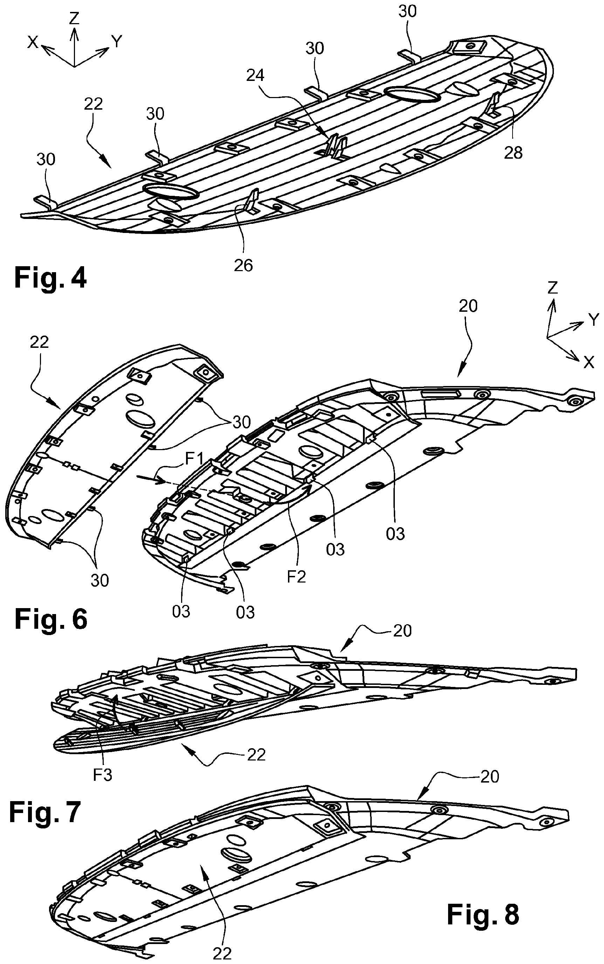

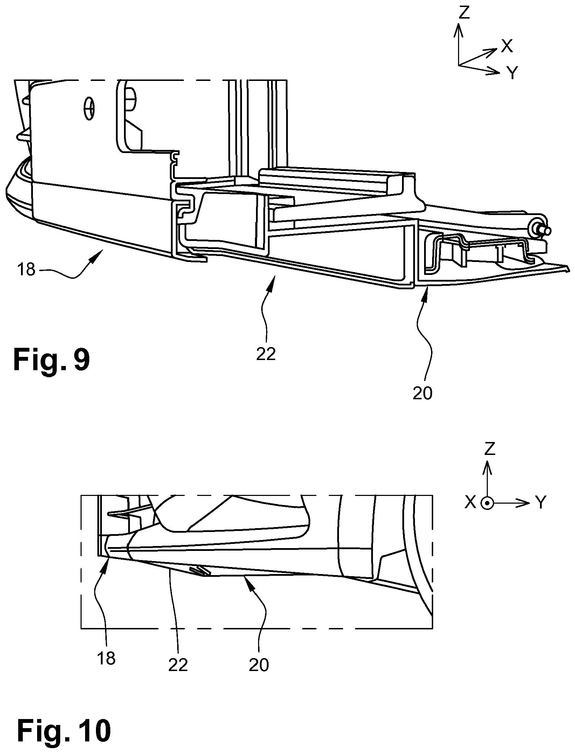

Une plaque de masquage 22 est montée en regard de la zone structurée localement W de la figure 1 de manière à masquer cette zone vis-à-vis de l'extérieur du véhicule et à offrir une face externe dotée d'une surface aérodynamique. La face externe de la plaque de masquage 22 est généralement lisse et présente, comme illustré sur la figure 3, des trous et orifices qui sont nécessaires notamment pour sa fixation à la plaque de renforcement et à la partie basse du pare-chocs et vis-à-vis d'autres contraintes telles que le réglage des anti-brouillards avant et la facilité de transport du pare-chocs assemblé. La plaque de masquage 22 et la plaque de renforcement 20 sont assemblées mécaniquement l'une avec l'autre de manière à présenter une continuité de surface vis-à-vis de l'extérieur du véhicule comme illustré sur la figure 3 et sur les figures 8 et 9 qui seront décrites ultérieurement.

La Figure 4 représente la face interne de la plaque de masquage 22 qui est équipée de plusieurs types d'organes d'accrochage destinés à coopérer avec des organes d'accrochage complémentaires prévus dans la plaque de renforcement 20, notamment dans la zone structurée localement W de celle-ci.

La plaque de masquage 22 comporte ainsi, par exemple, deux pattes de fixation ou ergots 24 montés dos à dos et disposés sensiblement dans la partie médiane de la plaque de manière à coopérer avec les deux bords opposés d'une ouverture O1 pratiquée dans la plaque de renforcement 20 (Figure 2).

Comme illustré sur la figure 5a, les deux bords opposés de l'ouverture O1 forment à l'extérieur des rampes convergeant vers l'ouverture de manière à coopérer avec les pentes respectives opposées des deux têtes des pattes de fixation 24, permettant ainsi de guider ces dernières dans l'ouverture en les déformant (grâce à leur élasticité) et de les avaler. Les deux têtes des pattes de fixation 24 sont pourvues chacune d'un retour qui coopère avec une des deux faces internes des deux bords opposés de l'ouverture O1 afin de retenir verticalement la plaque de masquage une fois que les têtes ont franchi l'ouverture.

La plaque de masquage comporte également, disposés ici de manière symétrique de part et d'autre des organes d'accrochage 24, deux organes d'accrochage supplémentaires 26 et 28 formés chacun d'une patte de fixation ou ergot analogue à celui de la figure 5a.

Ces organes d'accrochage sont destinés à coopérer respectivement avec l'un des deux bords opposés de deux ouvertures O2 pratiquées dans la plaque de renforcement 20 (Figure 2).

Comme illustré sur la figure 5b, les deux bords opposés de chaque ouverture O2 forment à l'extérieur des rampes convergeant vers l'ouverture de manière à coopérer avec la pente de la tête de l'une des deux pattes de fixation 26, 28, permettant ainsi de guider chaque tête dans l'ouverture correspondante et de l'avaler. Chaque tête de patte de fixation 26, 28 est pourvue d'un retour qui coopère avec une des deux faces internes des deux bords opposés de l'ouverture O2 correspondante afin de retenir verticalement la plaque de masquage.

La plaque de masquage de la figure 4 comporte en outre plusieurs pattes de fixation ou languettes 30 disposées notamment sur le bord libre arrière de la plaque, sensiblement à l'horizontale, là où les autres pattes de fixation 24, 26 et 28 étaient agencées sensiblement verticalement.

Ces organes d'accrochage sont destinés à coopérer respectivement avec des ouvertures prévues dans la plaque de renforcement 20 en correspondance géométrique avec la position de ces organes sur la plaque de masquage.

Comme représenté sur la figure 5c, une languette 30 est introduite dans une ouverture verticale O3 de la plaque de renforcement et prend appui sur la face interne de celle-ci (face supérieure sur la figure) afin de servir d'appui vertical à la plaque de masquage.

Les différentes languettes 30 sortant des ouvertures O3 sont illustrées sur la figure 2.

On notera que la position, le type et le nombre des différents organes d'accrochage peuvent bien entendu varier, notamment en fonction de différentes contraintes de conception.

Les plaques 20 et 22 présentent chacune des formes générales qui peuvent par exemple être qualifiées de semi-elliptiques. La plaque 20 présente en outre des excroissances ou oreilles 20a, 20b situées dans deux zones diamétralement opposées à proximité du grand axe de l'ellipse. Ces excroissances servent de parties de fixation de la plaque. Les plaques présentent toutes les deux un bord avant arrondi/courbe afin de suivre sensiblement la courbure interne de la partie basse du pare-chocs et un bord arrière généralement droit/rectiligne bien qu'il puisse adopter une autre forme.

Les figures 6 à 8 illustrent les principales étapes de montage/assemblage de la plaque de masquage 22 avec la plaque de renforcement 20.

La plaque de masquage 22 est d'abord amenée le long de la plaque de renforcement 20 par en dessous de celle-ci, suivant une direction sensiblement horizontale illustrée par la flèche F1 (Figure 6), de manière à amener en correspondance géométrique les languettes horizontales 30 et les ouvertures verticales O3 (ces ouvertures sont ici formées dans l'une des parois des cavités Ca). La plaque 22 est ensuite inclinée : le bord arrière de la plaque 22 équipé des languettes 30 est relevé en direction de la plaque de renforcement 20 afin d'introduire en biais les languettes dans les ouvertures, comme indiqué par la flèche pivotante F2.

Comme illustré sur la figure 7, une fois les languettes introduites dans les ouvertures, on fait pivoter la plaque 22 vers le haut comme indiqué par la flèche F3 afin d'amener en correspondance géométrique les différents organes d'accrochage de ladite plaque 22 avec les organes d'accrochage complémentaires de la zone structurée W de la plaque de renforcement 20 et de faire coopérer mécaniquement les différents organes entre eux. Ici, les organes d'accrochage 24, 26 et 28 sont engagés dans des ouvertures correspondantes O1 et O2 de la plaque de renforcement 20 afin de fixer mécaniquement les deux plaques entre elles. L'accrochage mécanique des plaques entre elles est réversible.

Lorsque les deux plaques sont assemblées/accrochées l'une avec l'autre, l'ensemble est ensuite monté/fixé sous la partie avant du véhicule, notamment à la partie basse 18 du pare-chocs. Comme illustré sur la Figure 9, l'ensemble des deux plaques est fixé au pare-chocs (les fixations ne sont pas représentées sur cette figure) par exemple par rivetage. La Figure 1 représenté des pattes de fixation 32 solidaires du pare-chocs, réparties sur son pourtour interne et dans lesquels sont positionnés des rivets pour solidariser l'ensemble plaques-pare-chocs. D'autres fixations sont prévues pour fixer la plaque 20 au pare-chocs.

Le fait de fixer des organes d'accrochage sur la face interne de la plaque de masquage 22 permet, une fois l'assemblage des deux plaques réalisé, de ne plus voir les organes d'accrochage puisqu'ils sont uniquement apparents sur la face interne de la plaque de renforcement 20, donc du côté interne au véhicule (Figure 2).

L'agencement des deux plaques l'une avec l'autre et l'aspect lisse des faces externes respectives de ces deux plaques assemblées offrent une continuité de surface qui permet au véhicule ainsi configuré d'offrir les performances aérodynamiques souhaitées.

La Figure 9 illustre cette continuité de surface.

Comme illustré sur la Figure 10, la plaque de masquage 22 et la partie avant 20 du soubassement (plaque de renforcement) assemblées l'une avec l'autre s'étendent verticalement jusqu'à une cote située en dessous de la cote de la partie basse 18 du pare-chocs. Ainsi, les deux plaques font légèrement saillie en dessous du pare-chocs, sous le véhicule. Cet agencement offre un encombrement interne au véhicule, au-dessus des deux plaques, suffisant pour loger les équipements nécessaires sans avoir besoin de modifier la carrosserie du véhicule notamment au niveau du capot. Comme les faces externes des deux plaques assemblées ont des surfaces aérodynamiques, cet agencement saillant abaissé améliore les performances aérodynamiques du véhicule.

## Revendications

1. Véhicule automobile (10) comprenant un pare-chocs avant (14) qui comporte une partie basse (18) s'étendant dans sa partie centrale (14a) de manière transversale relativement à un axe longitudinal (X) du véhicule et qui est fixée à une partie avant du soubassement (20) du véhicule, la partie avant du soubassement (20) comportant au moins une zone (W) qui est structurée localement de manière à augmenter la raideur mécanique de la partie basse du pare-chocs suivant ledit axe longitudinal (X) du véhicule en cas de choc sur ladite partie basse, le véhicule comprenant une plaque de masquage (22) montée en regard de ladite au moins une zone structurée (W) de la partie avant de manière à masquer ladite au moins une zone structurée vis-à-vis de l'extérieur du véhicule, ladite plaque de masquage (22) ayant une face externe orientée vers l'extérieur du véhicule et offrant une surface aérodynamique, **caractérisé en ce que** la partie avant du soubassement (20) est formée par une plaque de renforcement dans laquelle ladite au moins une zone structurée (W) comprend une succession de cavités et de caissons disposés suivant un axe transversal (Y) et **en ce que** la succession de cavités et de caissons comprend des nervures (N) agencées transversalement dans les cavités situées entre les caissons successifs.

2. Véhicule automobile selon la revendication 1, **caractérisé en ce que** la plaque de renforcement (20) comporte deux faces opposées dont une face externe qui est orientée vers l'extérieur du véhicule et qui offre une surface aérodynamique en dehors de ladite au moins une zone structurée (W) dans laquelle les cavités et caissons sont disposés.

3. Véhicule automobile selon la revendication 1 ou 2, **caractérisé en ce que** la plaque de masquage (22) est fixée à la partie avant du soubassement (20).

4. Véhicule automobile selon la revendication 3, **caractérisé en ce que** la plaque de masquage (22) comporte, sur une face interne orientée en regard de ladite au moins une zone structurée de la partie avant du soubassement, des organes d'accrochage (24, 26, 28,30) qui coopèrent avec des organes d'accrochage complémentaires (O1, O2, O3) prévus dans la partie avant du soubassement (20).

5. Véhicule automobile selon l'une des revendications 1 à 4, **caractérisé en ce que** la plaque de masquage (22) et la partie avant du soubassement (20) sont assemblées l'une avec l'autre de manière à présenter une continuité de surface vis-à-vis de l'extérieur du véhicule.

6. Véhicule automobile selon l'une des revendications 1 à 5, **caractérisé en ce que** la plaque de masquage (22) et la partie avant du soubassement (20) assemblées l'une avec l'autre s'étendent verticalement jusqu'à une cote située en dessous de la cote de la partie basse (18) du pare-chocs.

7. Véhicule automobile selon l'une des revendications 1 à 6, **caractérisé en ce que** ladite au moins une zone structurée localement (W) de la partie avant du soubassement est disposée dans l'alignement de la partie basse (18) du pare-chocs suivant l'axe longitudinal (X).

8. Véhicule automobile selon l'une des revendications 1 à 7, **caractérisé en ce que** la partie avant du soubassement (20) est disposée sous le compartiment moteur du véhicule.

## Patentansprüche

1. Kraftfahrzeug (10), das eine vordere Stoßstange (14) beinhaltet, die einen unteren Teil (18) umfasst, der sich in seinem mittigen Teil (14a) relativ zu einer Längsachse (X) des Fahrzeugs quer erstreckt und der an einem vorderen Teil des Unterbaus (20) des Fahrzeugs angebracht ist, wobei der vordere Teil des Unterbaus (20) mindestens einen Bereich (W) umfasst, der lokal strukturiert ist, um die mechanische Steifigkeit des unteren Teils der Stoßstange gemäß der Längsachse (X) des Fahrzeugs im Fall eines Stoßes gegen den unteren Teil zu erhöhen, wobei das Fahrzeug eine Abdeckplatte (22) beinhaltet, die gegenüber dem mindestens einen strukturierten Bereich (W) des vorderen Teils montiert ist, um den mindestens einen strukturierten Bereich gegenüber der Außenseite des Fahrzeugs abzudecken, wobei die Abdeckplatte (22) eine Außenfläche aufweist, die zu der Außenseite des Fahrzeugs zeigt und eine aerodynamische Oberfläche aufweist, **dadurch gekennzeichnet, dass** der vordere Teil des Unterbaus (20) durch eine Verstärkungsplatte gebildet ist, wobei der mindestens eine strukturierte Bereich (W) eine Folge von Hohlräumen und Kästen beinhaltet, die gemäß einer Querachse (Y) angeordnet sind, und dass die Folge von Hohlräumen und Kästen Rippen (N) beinhaltet, die in den Hohlräumen, die sich zwischen den aufeinanderfolgenden Kästen befinden, quer angeordnet sind.

2. Kraftfahrzeug nach Anspruch 1, **dadurch gekennzeichnet, dass** die Verstärkungsplatte (20) zwei gegenüberliegende Flächen umfasst, von denen eine eine Außenfläche ist, die zu der Außenseite des Fahrzeugs zeigt und außerhalb des mindestens einen strukturierten Bereichs (W), in dem die Hohlräume und Kästen angeordnet sind, eine aerodynamische Oberfläche aufweist.

3. Kraftfahrzeug nach Anspruch 1 oder 2, **dadurch gekennzeichnet, dass** die Abdeckplatte (22) an dem vorderen Teil des Unterbaus (20) befestigt ist.

4. Kraftfahrzeug nach Anspruch 3, **dadurch gekennzeichnet, dass** die Abdeckplatte (22) auf einer Innenfläche, die gegenüber dem mindestens einen strukturierten Bereich des vorderen Teils des Unterbaus angeordnet ist, Befestigungsorgane (24, 26, 28, 30) umfasst, die mit komplementären Befestigungsorganen (O1, 02, 03) zusammenwirken, die in dem vorderen Teil des Unterbaus (20) vorgesehen sind.

5. Kraftfahrzeug nach einem der Ansprüche 1 bis 4, **dadurch gekennzeichnet, dass** die Abdeckplatte (22) und der vordere Teil des Unterbaus (20) so zusammengefügt sind, dass sie gegenüber der Außenseite des Fahrzeugs eine durchgehende Oberfläche aufweisen.

6. Kraftfahrzeug nach einem der Ansprüche 1 bis 5, **dadurch gekennzeichnet, dass** sich die Abdeckplatte (22) und der vordere Teil des Unterbaus (20), die zusammengefügt sind, vertikal bis zu einem Maß erstrecken, das tiefer als das Maß des unteren Teils (18) der Stoßstange liegt.

7. Kraftfahrzeug nach einem der Ansprüche 1 bis 6, **dadurch gekennzeichnet, dass** der mindestens eine lokal strukturierte Bereich (W) des vorderen Teils des Unterbaus gemäß der Längsachse (X) in einer Flucht mit dem unteren Teil (18) der Stoßstange angeordnet ist.

8. Kraftfahrzeug nach einem der Ansprüche 1 bis 7, **dadurch gekennzeichnet, dass** der vordere Teil des Unterbaus (20) unter dem Motorraum des Fahrzeugs angeordnet ist.

## Claims

1. Motor vehicle (10) comprising a front bumper (14) which comprises a bottom part (18) extending in its central part (14a) transversely with respect to a longitudinal axis (X) of the vehicle and which is fixed to a front part of the body understructure (20) of the vehicle, the front part of the body understructure (20) comprising at least one zone (W) which is locally structured in such a way as to increase the mechanical stiffness of the bottom part of the bumper along said longitudinal axis (X) of the vehicle in the event of an impact on said bottom part, the vehicle comprising a masking plate (22) mounted facing said at least one structured zone (W) of the front part in such a way as to mask said at least one structured zone with respect to the outside of the vehicle, said masking plate (22) having an external face facing towards the outside of the vehicle and offering an aerodynamic surface, **characterized in that** the front part of the body understructure (20) is formed of a reinforcing plate in which said at least one structured zone (W) comprises a succession of cavities and of box structures arranged along a transverse axis (Y) and **in that** the succession of cavities and of box structures comprises ribs (N) arranged transversely in the cavities situated between the successive box structures.

2. Motor vehicle according to Claim 1, **characterized in that** the reinforcing plate (20) comprises two opposite faces, one of which is an external face which faces towards the outside of the vehicle and which offers an aerodynamic surface outside of said at least one structured zone (W) in which the cavities and box structures are arranged.

3. Motor vehicle according to Claim 1 or 2, **characterized in that** the masking plate (22) is fixed to the front part of the body understructure (20) .

4. Motor vehicle according to Claim 3, **characterized in that** the masking plate (22) comprises, on an internal face oriented to face said at least one structured zone of the front part of the body understructure, attachment members (24, 26, 28, 30) which collaborate with complementary attachment members (01, 02, 03) provided in the front part of the body understructure (20).

5. Motor vehicle according to one of Claims 1 to 4, **characterized in that** the masking plate (22) and the front part of the body understructure (20) are assembled with one another in such a way as to exhibit surface continuity with respect to the outside of the vehicle.

6. Motor vehicle according to one of Claims 1 to 5, **characterized in that** the masking plate (22) and the front part of the body understructure (20) assembled with one another extend vertically down to a level situated below the level of the bottom part (18) of the bumper.

7. Motor vehicle according to one of Claims 1 to 6, **characterized in that** said at least one locally structured zone (W) of the front part of the body understructure is arranged in alignment with the bottom part (18) of the bumper along the longitudinal axis (X).

8. Motor vehicle according to one of Claims 1 to 7 **characterized in that** the front part of the body understructure (20) is arranged under the engine compartment of the vehicle.
